# EUROPÄISCHE PATENTSCHRIFT

(11) **EP 1 082 243 B1**
(45) Veröffentlichungstag und Bekanntmachung des Hinweises auf die Patenterteilung: **18.07.2007**
(21) Anmeldenummer: 00918707.1
(22) Anmeldetag: 17.03.2000
(51) Int. Cl.: B60T 8/40, B60T 8/88

(54) **BREMSSYSTEM UND VERFAHREN ZUR STEUERUNG UND/ODER ÜBERWACHUNG EINER PUMPE EINES BREMSSYSTEMS**
BREAKING SYSTEM AND METHOD FOR CONTROLLING AND/OR MONITORING A PUMP OF A BREAKING SYSTEM
SYSTEME DE FREINAGE ET PROCEDE PERMETTANT DE COMMANDER ET/OU DE CONTROLER LA POMPE D'UN SYSTEME DE FREINAGE

(30) Priorität: 30.03.1999 DE 19914403
(43) Veröffentlichungstag der Anmeldung: 14.03.2001
(73) Patentinhaber: ROBERT BOSCH GMBH, 70442 Stuttgart (DE)
(72) Erfinder: HOFSAESS, Michael, D-71665 Vaihingen/Enz (DE); GOTTWICK, Ulrich, D-70192 Stuttgart (DE); SCHUNCK, Eberhard, Farmington Hills, MI 48331 (US)
(86) Internationale Anmeldenummer: PCT/DE2000/000856
(87) Internationale Veröffentlichungsnummer: WO 2000/059762

(56) Entgegenhaltungen:
- WO-A-97/05001
- DE-A- 4 405 672
- DE-A- 19 548 248
- US-A- 5 317 870
- US-A- 5 791 745

## Beschreibung

Die vorliegende Erfindung betrifft ein Bremssystem nach dem Oberbegriff des Patentanspruchs 1 sowie ein Verfahren zur Steuerung und/oder Überwachung einer Pumpe eines Bremssystems nach dem Oberbegriff des Patentanspruchs 3.

Aus der DE 195 48 248 A1 sind ein Verfahren und eine Vorrichtung zur Steuerung einer Pumpe eines elektrohydraulischen Bremssystems bekannt. In dem Bremssystem wird eine Hydraulikflüssigkeit aus einem Druckspeicher über Ventilmittel in die jeweiligen Radbremszylinder eingesteuert, wobei die Hydraulikflüssigkeit mit einer Pumpe in den Druckspeicher förderbar ist. Zur möglichst geräuschlosen Ladung des Druckspeichers durch die Pumpe ist letztere mit einem bedarfsgerecht vorgebbaren Pulspausenverhältnis ansteuerbar.

In der DE 195 48 248 A1 wird ein elektrohydraulisches Bremssystem beschrieben, bei dem das Laden des Druckspeichers durch die Pumpe leistungsgeregelt in Abhängigkeit von dem Volumenverbrauch der Bremsungen erfolgt. Dabei wird der Druck des Druckspeichers erfasst und das Pulspausenverhältnis, mit dem die Pumpe betrieben wird, in Abhängigkeit vom erfassten Druck mit diskreten Taktfrequenzen angesteuert.

Aus der US 5,317,870 A ist ein Kontrollsystem für einen Druckspeicher bekannt, der mittels einer Pumpe befüllt wird. Die Pumpe wird in Abhängigkeit des Signals einer Druckerfassungseinrichtung in Form einer An-/Aussteuerung betrieben. Zur Ermittlung der Steuersignale weist die Druckerfassungseinrichtung einen Drucksensor und einen Druckschalter auf. Die Druckerfassungseinrichtung vergleicht das Signal der beiden Druckerfassungsmittel miteinander, um einen Fehler in der Druckaufnahme zu erkennen (siehe Abstract).

Aus der Schrift US 5,791,745 A ist eine hydraulische Bremskraftversorgung bekannt, bei dem der Druck im Radbremszylinder in Abhängigkeit von dem Druck in einem Druckspeicher gesteuert wird. Der Druckspeicher wird durch eine Pumpe befüllt, die in Abhängigkeit vom Befüllungsgrad des Druckspeichers angesteuert wird. Die Erfassung des Befüllungsgrads erfolgt dabei über einen Drucksensor, der dem Druckspeicher zugeordnet ist.

Aus der DE 196 38 196 A1 ist ein System zur Überwachung eines Bremssystems mit einer ansteuerbaren Hydraulikpumpe, die sich in einem Hydraulikkreislauf befindet, und mit wenigstens einem Magnetventil, dessen Betriebszustand auf ein Steuersignal hin geändert werden kann, bekannt. Dabei wird durch die Änderung des Betriebszustandes des Magnetventils der Strömungswiderstand in dem Hydraulikkreislauf beeinflußt. Es sind Überwachungsmittel vorgesehen, mittels der bei Vorliegen bestimmter Betriebsbedingungen abhängig von einem ermittelten Nachlaufverhalten der Hydraulikpumpe bei unterschiedlichen Betriebszuständen des Magnetventils eine Anzeigevorrichtung zur Anzeige eines Fehlers betätigt wird.

Aus Sicherheitsgründen ist es notwendig, insbesondere bei elektrohydraulischen Bremssystemen stets die Druckversorgung zu überwachen. Zu diesem Zwecke wird der absolute Systemdruck ständig, und der Druck und die Druckänderungsrate bei einer Speicherladung auf Grenzwerte hin überwacht. Während einer Druckregelung (beispielsweise im Rahmen eines Anti-Blokkier-Systems oder Antriebsschlupf-Regelungs-Systems) kommt es zu einer Volumenentnahme aus dem Druckspeicher, welche nicht oder nur sehr schwer in genauer Weise meßbar ist. Bei einer gleichzeitigen Nachladung des Druckspeichers erweist es sich bei herkömmlichen Systemen als unmöglich, eine genaue Überwachung der Pumpenwirkung durchzuführen. Bei herkömmlichen Systemen kann lediglich aus einem Druckanstieg in dem Druckspeicher auf den Betrieb bzw. die Wirkung der Pumpe geschlossen werden.

Zur Vermeidung von Geräuschen wird eine derartige Pumpe beim Ladebetrieb nicht zu 100 % angesteuert, sondern in der Regel getaktet betrieben. Dennoch ist während des Fahrbetriebs ein durch die getaktete Pumpe hervorgerufenes Geräusch insbesondere bei Drehzahländerungen störend bemerkbar, während die Geräuschentwicklung bei konstanter Drehzahl wesentlich unauffälliger ist.

Aufgabe der Erfindung ist die Schaffung eines Bremssystems, bei welchem eine zuverlässige Überwachung des Pumpenbetriebes in einfacher Weise durchführbar ist. Es wird ferner angestrebt, ein Bremssystem mit einer möglichst geringen Geräuschentwicklung zur Verfügung zu stellen.

Die Aufgabe wird gelöst durch ein Bremssystem mit den Merkmalen des Patentanspruchs 1 sowie ein Verfahren zur Steuerung und/oder Überwachung einer Pumpe eines Bremssystems mit den Merkmalen des Patentanspruchs 3.

Erfindungsgemäß ist es nun möglich, insbesondere ein elektrohydraulisches Bremssystem derart zu betreiben, daß die Pumpenwirkung, d.h. insbesondere die Pumpendrehzahl und die Pumpenleistung, auch bei gleichzeitiger Volumenentnahme aus dem Druckspeicher beurteilt bzw. überwacht werden kann. Ferner ist durch die erfindungsgemäß in einfacher Weise mögliche Bestimmung der Pumpendrehzahl eine phasengeregelte Ansteuerung der Pumpe zur Minimierung störender Geräusche durch eine verbesserte Pumpentaktung möglich. Beim Pumpenbetrieb werden Druckpulsationen erzeugt, deren zeitlicher Verlauf das periodische Öffnen des Auslaßventiles der Pumpe, d.h. bei einem z.B. elektrohydraulischen Bremssystem der Speicherladepumpe, wiederspiegelt. Die Periodendauer der Pulsationen bzw. eines entsprechenden Meßsignals entspricht dabei der Umdrehungsdauer der Pumpe. Die maximale Pulsationshöhe ist ein Maß für die Pumpenleistung bei gegebener Elastizität auf der Pumpenausgangsseite und bei gegebener Temperatur der Hydraulikflüssigkeit bzw. des Druckmediums. Bei einem typischen z.B. elektrohydraulischen Bremssystem arbeitet die getaktete Pumpe beispielsweise mit Drehzahlen von etwa 1500 - 3000 U/min, was einer Periodendauer von 20 - 40 ms entspricht.

Vorteilhafte Ausgestaltungen des erfindungsgemäßen Bremssystems bzw. des erfindungsgemäßen Verfahrens sind Gegenstand der Unteransprüche.

Gemäß einer bevorzugten Ausgestaltung des erfindungsgemäßen Bremssystems ist der Drucksensor unmittelbar am Ausgang der Pumpe angeordnet. Durch diese Anordnung können trotz vorhandener Elastizitäten, welche beispielsweise durch in dem Bremssystem vorgesehene Speicher und/oder Bohrungen verursacht werden, Druckpulsationen in sehr genauer und zuverlässiger Weise ermittelt werden.

Gemäß einer bevorzugten Ausführungsform des erfindungsgemäßen Verfahrens wird eine Glättung sowie eine Offset-Kompensation eines durch die Ermittlung der Druckpulsationen erhaltenen Meßsignals durchgeführt. Bei Pumpendrehzahlen von 1500 - 3000 U/min kann man beispielsweise durch Einlesen des Drucksensorsignals mit genügender Häufigkeit, beispielsweise alle 2 ms, eine Glättung des Signals durchführen. Eine Offset-Kompensation ist dadurch erzielbar, daß man von diesem Signal ein langzeitgefiltertes Signal, beispielsweise den Mittelwert des Signals über die unmittelbar vorangehenden 40 - 80 ms, subtrahiert. Die Zeitdauer zwischen zwei positiven Nulldurchgängen ist hierbei ein Maß für die Periodendauer. Der Maximalwert bzw. die Amplitude des so erhaltenen Signals ist, in Abhängigkeit von der Temperatur des Druckmediums, direkt von der Pumpenleistung abhängig. Beispielsweise durch Vergleich der ermittelten Signalwerte mit abgelegten Tabellenwerten kann beurteilt werden, ob die Pumpenleistung mit den spezifizierten Werten übereinstimmt und somit die Pumpe ordnungsgemäß funktioniert.

Es erweist sich als vorteilhaft, die Pumpe getaktet zu betreiben und zu einem festlegbaren Zeitpunkt nach einem Nulldurchgang und/oder einem Extremum des geglätteten oder offset-kompensierten Meßsignals anzusteuern. Durch diese Maßnahme ist es möglich, die Körperschallentstehung unter dem Aspekt der Geräuschstärke zu minimieren. Die Pumpe kann besonders leise angetrieben werden, wenn sie phasenrichtig angesteuert wird.

Es ist erfindungsgemäß in einfacher Weise möglich, dem Wirkungsgrad der Pumpe anhand der Höhe der ermittelten Druckpulsationen bzw. der Amplitude des hieraus ermittelten Meßsignals zu überwachen.

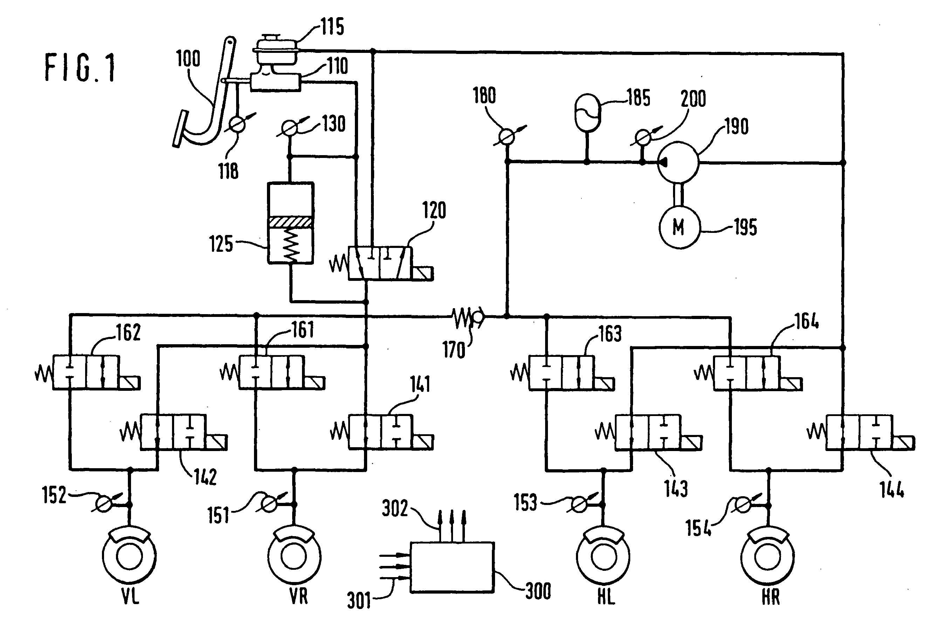

Eine bevorzugte Ausführungsform des erfindungsgemäßen Bremssystems wird nun unter Bezug auf die beigefügte Zeichnung im einzelnen erläutert. In dieser zeigt
- Figur 1: ein Blockdiagramm zur Darstellung der wesentlichen Elemente eines erfindungsgemäßen elektrohydraulischen Bremssystems, und
- Figur 2: ein Flußdiagramm zur Veranschaulichung des erfindungsgemäßen Verfahrens.

In dem dargestellten Bremssystem ist ein Bremspedal mit 100 bezeichnet. Über das Bremspedal kann Druck in einem Hauptbremszylinder 110 aufgebaut werden. Mittels eines Pedalwegsensors 118 kann die Bewegung des Bremspedals erfaßt werden. Der Hauptbremszylinder 110 steht mit einem Vorratsbehälter 115 in Kontakt. Der Hauptbremszylinder 110 steht in verbindung mit einem Sicherheitsventil 120, das sich in seinem nicht-bestromten Zustand in der dargestellten Stellung befindet. Parallel zu dem Sicherheitsventil ist ein Pedalwegsimulator 125 geschaltet.

In der Verbindungsleitung zwischen dem Hauptbremszylinder 110 und dem Sicherheitsventil 120 bzw. dem Pedalwegsimulator 125 ist ein Drucksensor 130 angeordnet, der ein Signal bereitstellt, das den Druck PHZ im Hauptbremszylinder anzeigt.

Im nicht-bestromten Zustand gibt das Sicherheitsventil 120 die Verbindung zwischen dem Hauptbremszylinder und Auslaßventilen 141 und 142 frei. Die Auslaßventile sind ebenfalls in ihrem nicht-bestromten Zustand in Durchlaßrichtung geschaltet und geben die Verbindung zu Radbremszylindern frei.

Das Auslaßventil 141 ist dem Radbremszylinder VR des rechten Vorderrades, und das Auslaßventil 142 dem Radbremszylinder VL des linken Vorderrades zugeordnet. Der Druck in den Radbremszylindern kann durch Sensoren 151, 152 erfaßt werden.

Die Radbremszylinder stehen ferner über Einlaßventile 161 und 162 und ein Rückschlagventil 170 mit einem Druckspeicher 185 in Kontakt. Der Druck in dem Druckspeicher 185 kann mittels eines Drucksensors 180 erfaßt werden. Das Einlaßventil 161 ist dem rechten Vorderrad, und das Einlaßventil 162 dem linken Vorderrad zugeordnet.

Der Druckspeicher 185 steht ferner über Einlaßventile 163 und 164 mit dem Radbremszylinder HL des linken Hinterrades bzw. dem Radbremszylinder HR des rechten Hinterrades in Kontakt. Die Radbremszylinder des linken Hinterrades bzw. des rechten Hinterrades stehen wiederum über Auslaßventile 143 bzw. 144 mit dem Vorratsbehälter 115 in Kontakt.

Die Auslaßventile 141 und 142 können über das Sicherheitsventil 120 ebenfalls mit dem Vorratsbehälter 115 in Kontakt gebracht werden.

Eine Pumpe 190, die von einem Pumpenmotor 195 angetrieben wird, fördert die Hydraulikflüssigkeit von dem Vorratsbehälter 115 in den Druckspeicher 185.

Auf der Ausgangsseite der Pumpe 190, d.h. zwischen Pumpe 190 und Druckspeicher 185, ist ein weiterer Drucksensor 200 vorgesehen. Mittels dieses Drucksensors 200 sind durch den Pumpenbetrieb verursachte Druckpulsationen in der Hydraulikflüssigkeit ermittelbar. Der zeitliche Verlauf der Druckpulsationen spiegelt das periodische Öffnen des (nicht im einzelnen dargestellten) Auslaßventiles der Pumpe 190 wieder. Die ermittelten Druckpulsationssignale sind einer Steuereinheit 300 zuführbar, welche eine geeignete Signalverarbeitung durchführt. Zweckmäßigerweise handelt es sich bei dieser Steuereinheit 300 um eine Steuereinheit, welche den Gesamtbetrieb des dargestellten elektrohydraulischen Bremssystems, d.h. die Ansteuerung der Pumpe, der übrigen Drucksensoren und der Ventile, steuert bzw. regelt. Eingangssignalleitungen und Ausgangssignalleitungen der Steuereinheit 300 sind mit 301 bzw. 302 bezeichnet. Aus Gründen der Übersichtlichkeit der Zeichnung sind mit dem Drucksensor 200 oder den anderen Elementen des dargestellten Bremssystems verbundene Signalleitungen, welche mit den Signalleitungen 301, 302 kommunizieren, nicht im einzelnen dargestellt.

Das dargestellte elektrohydraulische Bremssystem arbeitet nun wie folgt:

Beim ordnungsgemäßen Betrieb wird das Sicherheitsventil 120 bestromt. Das Sicherheitsventil 120 gibt die Verbindung zwischen dem Vorratsbehälter 115 und den Auslaßventilen frei und unterbricht die Verbindung zwischen dem Hauptbremszylinder 110 und den Auslaßventilen. Betätigt der Fahrer das Bremspedal 100, so ermittelt der Sensor 118 das Signal, daß dem Pedalweg des Bremspedals 100 entspricht und/ oder der Sensor 130 liefert ein Drucksignal bezüglich des Drucks im Hauptbremszylinder.

Ausgehend von wenigstens einem dieser Signale, die dem Fahrerwunsch entsprechen, sowie eventuell weiteren Betriebskenngrößen, bestimmt die Steuereinheit 300 Ansteuersignale zur Beaufschlagung der Einlaßventile 161, 162, 163 und 164 sowie der Auslaßventile 141, 142, 143 und 144.

Durch Bestromen des Pumpenmotors 195 wird die Pumpe 190 angetrieben und fördert Hydraulikflüssigkeit vom Vorratsbehälter 115 in den Druckspeicher 185. Dies hat zur Folge, daß der Druck im Druckspeicher 185, der von dem Drucksensor 180 gemessen wird, ansteigt. Durch Öffnen der Einlaßventile 161 bis 164 und Schließen der Auslaßventile 141 bis 144 wird der Druck in den Radbremszylindern abhängig vom Fahrerwunsch erhöht. Durch Öffnen der Auslaßventile und Schließen der Einlaßventile kann der Druck in den Radbremszylindern entsprechend der Pedalbetätigung abgebaut werden.

Besonders vorteilhaft ist, den Druck in den Radbremszylindern mit den Drucksensoren 151 bis 154 zu messen. In diesem Fall ist eine Druckregelung und/oder eine Fehlerüberwachung möglich.

Der Pedalwegsimulator 125 bewirkt, daß der Fahrer am Bremspedal 100 eine entsprechende Kraft spürt, die bei entsprechender Betätigung des Bremspedals bei einem herkömmlichen Bremssystem auftreten würde.

Bei Ausfall der Einrichtung wird das Sicherheitsventil 120 stromlos und gibt die Verbindung zwischen dem Hauptbremszylinder 110 und den Radbremszylindern der Vorderräder VL, VR frei. Damit hat der Fahrer über das Bremspedal Durchgriff auf die Radbremszylinder der Vorderräder.

Die Pumpe 190 muß ausreichend Hydraulikflüssigkeit in den Druckspeicher fördern, damit ein ausreichender Bremsdruck zur Verfügung steht. Die Überwachung des Pumpenbetriebes ist mittels des Drucksensors 200 durchführbar. Es sei angemerkt, daß auf den erwähnten Drucksensor 180 verzichtet werden kann, da mit dem langzeitgefilterten Signal aus dem Drucksensor 200 eine Information über die Füllung des Speichers vorliegt. Die Periodendauer des gemessenen Druckpulssignals entspricht hierbei der Pumpenumdrehungsdauer. Die maximale Pulsationshöhe bzw. die Amplitude des Meßsignals stellt ein Maß für die Pumpenleistung bei gegebener Elastizität auf der Pumpenausgangsseite und bei gegebener Temperatur des Druckmediums dar. Mittels geeigneter, in der Steuereinheit 300 durchzuführender Signalverarbeitungen ist somit eine ständige Überwachung der Pumpenleistung, insbesondere auch bei gleichzeitiger Volumenentnahme aus dem Druckspeicher 185, möglich. Die Temperatur des elektrohydraulischen Bremssystems, d.h. insbesondere die Temperatur der Hydraulikflüssigkeit, kann beispielsweise mittels einer in dem Drucksensor 200 vorgesehenen Temperaturerfassungseinrichtung ermittelt werden. Derartige Temperaturerfassungseinrichtungen sind auch bei den weiteren, in dem dargestellten Bremssystem verwendeten Drucksensoren vorsehbar. Ein so ermitteltes Temperatursignal kann ebenfalls der Steuereinheit zugeführt werden, so daß das gemessene Druckpulssignal für eine gegebene Temperatur mit in dem Steuergerät abgelegten Tabellenwerten verglichen werden kann. Somit kann in einfacher und unaufwendiger Weise festgestellt werden, ob die Pumpenleistung mit den abgelegten bzw. spezifizierten Werten übereinstimmt.

Das erfindungsgemäße Vorsehen des Drucksensors 200 erlaubt ferner eine phasengeregelte Ansteuerung der Pumpe 190, wodurch eine Minimierung der Geräuschentwicklung der Pumpe 190 erzielbar ist. Dadurch, daß mittels des Drucksensors 200 die Drehzahl der Pumpe 190 in einfacher und zuverlässiger Weise ermittelbar ist, ist diese Drehzahl als Führungsgröße bei der Pumpenregelung verwendbar. Insgesamt kann mittels der Anordnung des Drucksensors 200 an der Ausgangsseite der Pumpe 190 der Wirkungsgrad der Pumpe ständig überwacht, sowie die Pumpe mit einer weitgehend konstanten Drehzahl und/oder einer phasenrichtigen Ansteuerung geräuscharm betrieben werden.

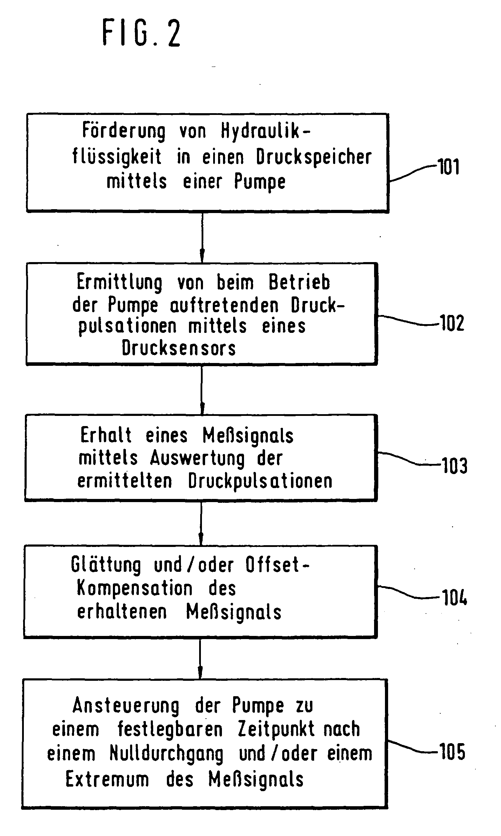

Das erfindungsgemäße Verfahren ist in dem Flußdiagramm der Figur 2 noch einmal dargestellt. In einem Schritt 101 erfolgt hierbei die Förderung von Hydraulikflüssigkeit in den Druckspeicher 185 mittels der Pumpe 190. In einem sich hieran anschließenden Schritt 102 wird mittels des Drucksensors 200 eine Ermittlung von beim Betrieb der Pumpe auftretenden Druckpulsationen durchgeführt. In einem weiteren Schritt 103 wird mittels einer Auswertung der ermittelten Druckpulsationen ein Meßsignal zur Steuerung bzw. Überwachung der Pumpenleistung erhalten. In einem anschließenden Schritt 104 erfolgt eine Glättung und/oder Offset-Kompensation des erhaltenen Meßsignals. Auf der Grundlage dieses geglätteten bzw. offset-kompensierten Meßsignals erfolgt schließlich in einem Schritt 105 die Ansteuerung der Pumpe zu einem festlegbaren Zeitpunkt nach einem Nulldurchgang und/oder einem Extremum des Meßsignals.

Die Vorrichtung und das Verfahren sind nicht auf das im Ausführungsbeispiel eingesetzte elektrohydraulische Bremssystem beschränkt. Vielmehr ist die Erfindung bei beliebigen Bremssystemen einsetzbar, bei welchen am Ausgang des das Druckmedium fördernden Mittels, insbesondere einer Pumpe, beispielsweise sensorisch Druckpulsationen erfaßt und demzufolge ausgewertet werden können.

## Patentansprüche

1. Bremssystem, insbesondere elektrohydraulisches Bremssystem, bei dem eine Hydraulikflüssigkeit aus einem Druckspeicher (185) über Ventilmittel (161, 162, 163, 164) in jeweilige Radbremszylinder einsteuerbar ist, wobei die Hydraulikflüssigkeit mittels einer Pumpe (190) in den Druckspeicher (185) förderbar ist, **gekennzeichnet durch**
- einen an der Ausgangsseite der Pumpe (190) angeordneten Drucksensor (200) zur Ermittlung von beim Pumpenbetrieb in der Hydraulikflüssigkeit auftretenden Druckpulsation und
- ein Mittel (300) zur Ermittlung der Pumpenleistung und/oder der Drehzahl der Pumpe in Abhängigkeit von der Auswertung der Druckpulsationen zum Erhalt eines Messsignals
o zur Steuerung der Pumpe (190) in Abhängigkeit von der ermittelten Drehzahl und/oder
o zur Überwachung der Pumpe (190) in Abhängigkeit von der ermittelten Pumpenleistung.

2. Vorrichtung nach Anspruch 1, **dadurch gekennzeichnet, dass** der Drucksensor (200) unmittelbar am Ausgang der Pumpe (190) angeordnet ist.

3. Verfahren zur Steuerung und/oder Überwachung einer Pumpe eines Bremssystems, insbesondere eines elektrohydraulischen Bremssystems, bei dem die Hydraulikflüssigkeit aus einem Druckspeicher (185) über Ventilmittel (161, 162, 163, 164) in die Radbremszylinder eingesteuert wird, wobei die Hydraulikflüssigkeit mittels einer Pumpe (190) in den Druckspeicher (185) gefördert wird, **dadurch gekennzeichnet, dass**
- in Abhängigkeit von der beim Betrieb der Pumpe (190) auftretenden Druckpulsationen die Pumpenleistung und/oder der Drehzahl der Pumpe ermittelt und
- zum Erhalt eines Messsignals zur Steuerung der Pumpe (190) in Abhängigkeit von der Drehzahl und/oder
- zur Überwachung der Pumpe (190) in Abhängigkeit von der Pumpenleistung ausgewertet werden.

4. Verfahren nach Anspruch 3, **dadurch gekennzeichnet, dass** eine Glättung und/oder eine Offset-Kompensation des erhaltenen Messsignals durchgeführt wird.

5. Verfahren nach Anspruch 4, **dadurch gekennzeichnet, dass** die Pumpe (190) getaktet betrieben wird, wobei die Pumpe zu einem festlegbaren Zeitpunkt nach einem Nulldurchgang und/oder einem Extremum des geglätteten und/oder offset-kompensierten Messsignals angesteuert wird.

6. Verfahren nach einem der vorstehenden Ansprüche 3 bis 5, **dadurch gekennzeichnet, dass** der Wirkungsgrad der Pumpe (190) anhand der Höhe der ermittelten Druckpulsationen bzw. der Amplitude des aus den Druckpulsationen ermittelten Messsignals überwacht wird.

## Claims

1. Brake system, in particular electrohydraulic brake system, in which a hydraulic fluid can be input into respective wheel brake cylinders from a pressure accumulator (185) via valve means (161, 162, 163, 164), it being possible to feed the hydraulic fluid into the pressure accumulator (185) by means of a pump (190), **characterized by**
- a pressure sensor (200) which is arranged at the outlet end of the pump (190) and has the purpose of determining pressure pulsation occurring in the hydraulic fluid during operation of the pump, and
- a means (300) for determining the pump capacity and/or the rotational speed of the pump as a function of the evaluation of the pressure pulsations in order to obtain a measurement signal
• for controlling the pump (190) as a function of the determined rotational speed and/or
• for monitoring the pump (190) as a function of the determined pump capacity.

2. Device according to Claim 1, **characterized in that** the pressure sensor (200) is arranged directly at the outlet of the pump (190).

3. Method for controlling and/or monitoring a pump of a brake system, in particular of an electrohydraulic brake system, in which the hydraulic fluid is input into the wheel brake cylinders from a pressure accumulator (185) via valve means (161, 162, 163, 164), the hydraulic fluid being fed into the pressure accumulator (185) by means of a pump (190), **characterized in that**
- the pump capacity and/or the rotational speed of the pump are determined as a function of the pressure pulsations occurring during operation of the pump (190),
and are evaluated
- in order to obtain a measurement signal for controlling the pump (190) as a function of the rotational speed and/or
- in order to monitor the pump (190) as a function of the pump capacity.

4. Method according to Claim 3, **characterized in that** the measurement signal which is obtained is smoothed and/or subjected to offset compensation.

5. Method according to Claim 4, **characterized in that** the pump (190) is operated in a clocked fashion, the pump being actuated at a definable point in accordance with a zero crossover and/or an extreme value of the smoothed and/or offset-compensated measurement signal.

6. Method according to one of the preceding Claims 3 to 5, **characterized in that** the efficiency of the pump (190) is monitored by reference to the level of the pressure pulsations which are determined and/or the amplitude of the measurement signal which is determined from the pressure pulsations.

## Revendications

1. Système de freinage, notamment système de freinage électrohydraulique, dans lequel un fluide hydraulique provenant d'un accumulateur de pression (185) peut être envoyé par commande dans des cylindres de frein de roue respectifs par l'intermédiaire de moyens de soupape (161, 162, 163, 164), le fluide hydraulique pouvant être refoulé par une pompe (190) dans l'accumulateur de pression (185),
**caractérisé par**
- un capteur de pression (200) disposé du côté sortie de la pompe (190) pour déterminer les pulsations de pression produites dans le fluide hydraulique lorsque la pompe est en fonctionnement et
- un moyen (300) permettant de déterminer la puissance de la pompe et/ou la vitesse de rotation de la pompe en fonction de l'évaluation des pulsations de pression pour produire un signal de mesure, permettant :
• de commander la pompe (190) en fonction de la vitesse de rotation déterminée et/ou
• de contrôler la pompe (190) en fonction de la puissance de la pompe déterminée.

2. Dispositif selon la revendication 1,
**caractérisé en ce que**
le capteur de pression (200) est disposé directement à la sortie de la pompe (190).

3. Procédé permettant de commander et/ou de contrôler la pompe d'un système de freinage, notamment d'un système de freinage électrohydraulique, dans lequel le fluide hydraulique provenant d'un accumulateur de pression (185) est envoyé par commande dans des cylindres de frein de roue par l'intermédiaire de moyens de soupape (161, 162, 163, 164), le fluide hydraulique étant refoulé par une pompe (190) dans l'accumulateur de pression (185),
**caractérisé en ce que**
- on détermine la puissance de la pompe et/ou la vitesse de rotation de la pompe en fonction des pulsations de pression produites lors du fonctionnement de la pompe (190), et
- on les exploite pour produire un signal de mesure permettant de commander la pompe (190) en fonction de la vitesse de rotation et/ou
- permettant de contrôler la pompe (190) en fonction de la puissance de la pompe.

4. Procédé selon la revendication 3,
**caractérisé en ce qu'**
on effectue un lissage et/ ou une compensation de décalage du signal de mesure produit.

5. Procédé selon la revendication 4,
**caractérisé en ce que**
la pompe (190) fonctionne de manière cadencée, en étant commandée à un instant déterminable suivant un point de passage à zéro et/ou un extrême du signal de mesure lissé et/ou à compensation de décalage.

6. Procédé selon l'une des revendications précédentes 3 à 5,
**caractérisé en ce que**
le rendement de la pompe (190) est contrôlé sur la base de la hauteur des pulsations de pression déterminées ou sur la base de l'amplitude du signal de mesure déterminé à partir des pulsations de pression.
